# EUROPEAN PATENT SPECIFICATION

(11) **EP 3 222 132 B1**
(45) Date of publication and mention of the grant of the patent: **26.08.2020**
(21) Application number: 17161727.7
(22) Date of filing: 20.03.2017
(51) Int. Cl.: A01D 34/82, A01D 67/00, A01D 34/00, B60G 21/05, B60G 3/06

(54) **SELF-PROPELLED LAWN MOWER DEVICE**
SELBSFAHRENDER RASENMÄHER
TONDEUSE AUTOPROPULSÉE

(30) Priority: 24.03.2016 IT UA20161982
(43) Date of publication of application: 27.09.2017
(73) Proprietor: Bernini, Fabrizio, 52021 Bucine - Arezzo (IT)
(72) Inventor: Bernini, Fabrizio, 52021 Bucine - Arezzo (IT)
(74) Representative: Paparo, Aldo

(56) References cited:
- EP-A1- 1 535 766
- WO-A1-2015/192900
- GB-A- 425 092
- JP-B2- 2 896 017
- US-A- 3 006 627
- US-A- 3 415 335
- US-A- 4 821 835
- US-A1- 2006 070 366
- US-A1- 2011 197 419
- US-A1- 2013 291 509

## Description

This invention relates to a self-propelled lawn mower device, in particular a self-propelled work device for cutting grass.

Self-propelled lawn mower devices are known comprising a frame supporting one or more motor-driven work apparatuses, for example a cutting blade designed to perform the cutting of grass.

The frame is usually movable on four wheels: a first pair of wheels constitutes a drive axis of the device positioned behind the normal direction of travel of the device, a second pair of wheels constitutes an idle axis of the device positioned in front of the normal direction of travel of the device.

The self-propelled lawn mower devices must be able to move in any condition and on any ground, also uneven, and at the same time they must guarantee a good strength and rigidity for the support and correct operation of the motor-driven work apparatuses.

More specifically, the need is particularly felt in the sector for self-propelled lawn mower devices which are able to guarantee a correct forward movement even in the presence of obstacles, whilst maintaining a high level of quality of the work which can be achieved, for example cutting the grass.

The Applicant has concluded that this need may be satisfied by maintaining a correct positioning of the device on the ground.

In the field of manned vehicle some teaching in this regards can be found in documents US2011/197419 and GB425092.

In this context, the technical purpose which forms the basis of this invention is to provide a self-propelled lawn mower device which overcomes at least some of the above-mentioned drawbacks of the prior art.

More specifically, the aim of this invention is to provide a self-propelled lawn mower device which is able to also move on uneven ground, guaranteeing an excellent final result of the work to be carried out.

A further aim of this invention is to provide self-propelled lawn mower device which is simple and light.

The technical purpose indicated and the aims specified are substantially achieved by a self-propelled lawn mower device comprising the technical features described in one or more of the appended claims. The dependent claims correspond to possible different embodiments of the invention. More specifically, this invention relates to a self-propelled lawn mower device, according to claim 1, provided with a supporting structure for one or more motor-driven work apparatuses, for example at least one cutting blade configured to perform the cutting of grass during the movement of the lawn mower device. In this example embodiment the device is a self-propelled lawn mower.

The self-propelled lawn mower device comprises at least one drive wheel, preferably a pair of drive wheels, for moving the motor-driven mower device along a work surface, for example a lawn.

The self-propelled lawn mower device comprises two idle wheels. Each idle wheel is mounted on the supporting structure by means of an axle, structurally separate from the other axle.

Each axle is mounted on the supporting structure so as to rotate independently of the other axle around an axis of rotation positioned perpendicularly to the axle itself.

The rotation of the two axles may occur between a lowered position and a raised position relative to the supporting structure itself. This rotation is for example caused by the passage of an idle wheel over an obstacle such as a stone, a step or a bump in the ground.

Preferably, the self-propelled work device comprises elastic means configured so as to operate on each axle in opposition to a raising motion of the respective axle.

The Applicant has noted that a simple, stable, robust self-propelled lawn mower device is obtained which able to guarantee correct operation on any ground.

Preferably, each axle is hinged to the supporting structure at an end portion of the axle, so as to optimise the materials and the arrangement of the axles on the supporting structure.

Preferably, each axle is hinged to the supporting structure at a respective rotation pin. Still more preferably, the two rotation pins are separate from each other and positioned at a distance such as to define two respective axes of rotation positioned parallel to each other.

According to a possible embodiment, the rotation pins are positioned at a central portion of the supporting structure preferably positioned at an equidistant position between the two idle wheels. In this case, the distance between the two rotation pins is preferably less than the distance between each rotation pin and the corresponding idle wheel.

Alternatively, each rotation pin is positioned at a side portion of the supporting structure. In this case, the distance between the two rotation pins is greater than the distance between each rotation pin and the corresponding idle wheel.

According to a possible embodiment, each axle is hinged to the supporting structure at a same rotation pin defining a single axis of rotation of the axles. Preferably, the rotation pin is positioned at a central portion of the supporting structure preferably positioned at an equidistant position between the two idle wheels.

According to the invention, the elastic means comprise an elastic element interposed between the two axles at a predetermined distance from the respective axis of rotation, and the axles have respective inclined surfaces positioned facing each other defining an angled seat positioned astride the two axles and the elastic element is positioned in the angled seat.

In one possible embodiment, the elastic means comprise an elastic element for each axle, positioned coaxial with the axis of rotation.

Further features and advantages of the invention are more apparent in the non-limiting description which follows of a preferred embodiment of a self-propelled lawn mower device illustrated in the accompanying drawings.

The description is set out below with reference to the accompanying drawings which are provided solely for purposes of illustration without restricting the scope of the invention and in which:

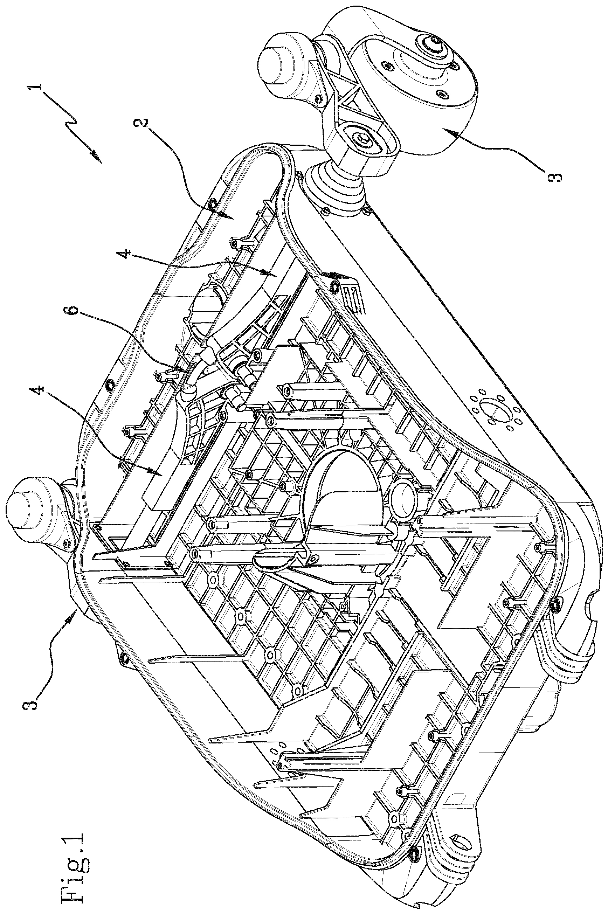

- Figure 1 is a schematic perspective view of a portion of a portion of a self-propelled lawn mower device according to this invention;
- Figure 2 is a schematic cross section view of the portion of Figure 1.

With reference to the above-mentioned drawings, the numeral 1 denotes in its entirety a self-propelled lawn mower device 1.

The device 1 comprises a supporting structure 2 made, for example, of plastic material, a lower portion of which is illustrated in the accompanying drawings. The supporting structure 2 preferably comprises a box-shape designed to receive one or more motor-driven work apparatuses. In the case of the self-propelled lawn mower the supporting structure 2 is designed to receive and to support the cutting blade and the respective drive means.

The supporting structure 2 is designed to support at least one drive wheel not illustrated, preferably a pair of drive wheels mounted on the supporting structure for example at a rear portion of the device 1 according to the normal feed direction of the device itself. The above-mentioned drive wheel is operatively connected to motor means, not illustrated, for moving the device 1 along a work surface, for example along a lawn to be cut. The supporting structure 2 also supports two idle wheels 3 preferably positioned at a front portion of the device 1 according to the normal feed direction of the device itself.

Each idle wheel is mounted on the supporting structure 2 by means of an axle 4.

Each axle 4 extends between an inner end portion 4a of the outer and an outer end portion 4b on which is mounted a respective idle wheel 3. Each axle 4 extends between the two end portions along a main direction of extension "L".

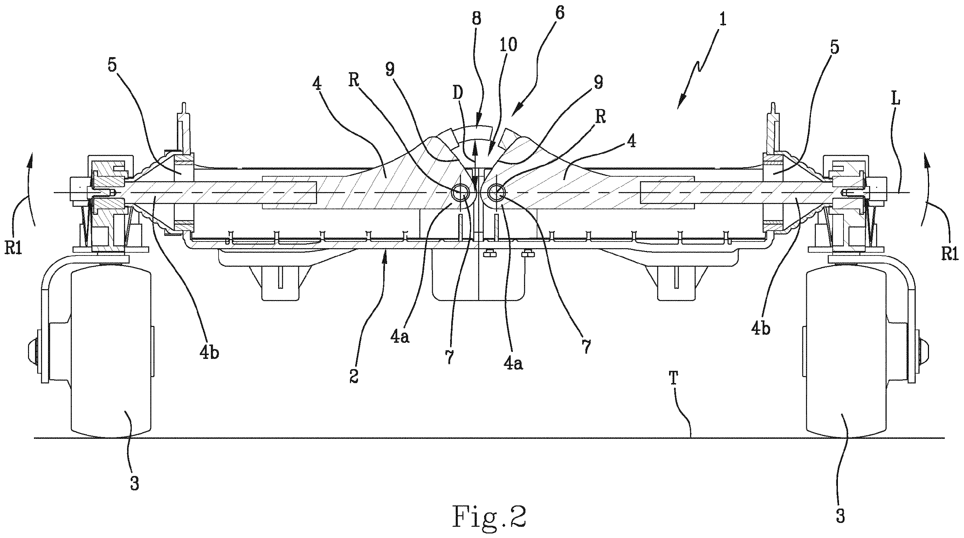

Each axle 4 is structurally separate from the other and is mounted on the supporting structure 2 so as to rotate independently of the other axle around an axis of rotation "R" positioned perpendicularly to the axle itself. The rotation of each axle 4 about the ais of rotation "R" extends between a lowered position and a raised position relative to the supporting structure 2. More specifically, Figure 2 shows an intermediate position of each axle 4, wherein the two axles are positioned with coincident directions of main extension "L".

Preferably, the supporting structure 2 has an opening 5 for each axle 4 having dimensions such as to allow the rotation of the respective axle 4 between the lowered position and the raised position and vice versa.

The position of Figure 2 corresponds to the position of travel of the device 1 on horizontal ground and without obstacles. The arrow "R1" denotes the rotational motion of each axle 4 between the lowered position and the raised position, that is to say, the raising motion of the respective axle 4. The device 1 comprises elastic means 6 configured in such a way as to operate on each axle 4 in contrast to the raising motion of the respective axle.

According to a possible embodiment, of which the accompanying drawings constitute a non-limiting example, each axle 4 is hinged to the supporting structure 2 at the inner end portion 4a of the axle.

Preferably, each axle 4 is hinged to the supporting structure 2 at a respective rotation pin 7. In other words the device 1 comprises two rotation pins 7 each associated with an axle 4. Preferably, the rotation pins 7 are therefore separate and positioned at a distance such as to define respective axes of rotation "R" positioned parallel to each other. According to a possible embodiment, of which the accompanying drawings constitute a non-limiting example, the rotation pins 7 are positioned at a central portion of the supporting structure 2 positioned at an equidistant position between the two idle wheels.

According to a possible alternative embodiment, not illustrated, each rotation pin 7 may be positioned at a side portion of the supporting structure. In this case, the distance between the two rotation pins is preferably less than the distance between each rotation pin and the corresponding idle wheel.

According to a possible further alternative embodiment, not illustrated, each axle 4 is hinged to the supporting structure 2 at a same rotation pin defining a single axis of rotation of the axles. Preferably, in this embodiment, the rotation pin is positioned at a central portion of the supporting structure preferably positioned at an equidistant position between the two idle wheels.

According to a possible embodiment, of which the accompanying drawings constitute a non-limiting example, the elastic means 6 comprise an elastic element 8 interposed between the two axles 4 at a predetermined distance "D" from the respective axis of rotation. In this way, the elastic element 8 is positioned in such a way as to oppose the rotation of the corresponding axis 4 in particular according to the raising motion of the axle itself. Preferably, the axles 4 have respective inclined surfaces 9 positioned facing each other in such a way as to form an angled seat 10 positioned across the two axles 4 and designed to house the elastic element 8. According to a possible alternative embodiment, not illustrated, the elastic means comprise an elastic element for each axle, for example a torsion spring, positioned coaxial to the axis of rotation.

According to alternative embodiments, the device 1 according to this invention may be used for purposes other than those indicated, for example in the agricultural or sports or household sector. Advantageously, the device 1 may comprise a switch which can be operated when both the idle wheels 3 are in the completely lowered position (that is to say, when the device is raised by a user).

The above-mentioned switch is connected at least to the cutting blade and/or the drive wheels of the device 1 to stop the operation when the device 1 is in a position raised relative to the ground "T".

In use the device 1 according to the invention is moved along the ground "T" which is for example uneven in such a way as to perform the work for which it was designed and programmed.

During this movement the device may encounter obstacles of various types, for example stones, steps, bumps in the ground or other obstacles which, with a rigid structure, would result in an unstable positioning of the device on the ground and, therefore, an incorrect operation of the device itself.

When an idle wheel 3 encounters an obstacle and it is able to overcome it, the wheel is positioned at a level slightly higher than the other wheels of the device causing the rotation of the corresponding axle 4 about its rotation pin 7. In the raising motion, the axle 4 encounters the resistance offered by the elastic means 6.

The presence of two separate axles movable independently of each other makes it possible to obtain a device 1 which is easy to make and of limited weight, suitable for any type of ground and any type of work, wherein the two idle wheels may raise and/or lower independently of each other, guaranteeing and optimum adaptation to the shape of the ground.

## Claims

1. A self-propelled lawn mower device (1) comprising:
a supporting structure (2) for one or more motor-driven work apparatuses,
at least one drive wheel mounted on the supporting structure (2) and
operatively connected to motor means for moving the motor-driven lawn mower device along a work surface,
two idle wheels (3), each idle wheel being mounted on the supporting structure (2) by means of an axle (4),
wherein each axle is structurally separate from the other and is mounted on the supporting structure so as to rotate independently of the other axle around an axis of rotation (R) positioned perpendicularly to the axle itself,
between a lowered position and a raised position relative to the supporting structure itself,
wherein the self-propelled lawn mower device comprises elastic means (6) configured so as to operate on each axle in opposition to a raising motion of the respective axle, said elastic means (6) comprising an elastic element (8) interposed between the two axles (4) at a given distance from the respective axis of rotation (R),
said device being **characterized in that** the axles (4) have respective inclined surfaces (9) positioned facing each other defining an angled seat (10) positioned astride the two axles (4), and wherein the elastic element (8) is positioned in the angled seat (10).

2. The self-propelled lawn mower device (1) according to claim 1, wherein each axle (4) is hinged to the supporting structure (2) at an end portion (4a) of the axle itself.

3. The self-propelled lawn mower device (1) according to claim 2, wherein each axle (4) is hinged to the supporting structure (2) at a respective rotation pin (7), the rotation pins being separate and positioned at a distance such as to define respective axes of rotation (R) positioned parallel to each other.

4. The self-propelled lawn mower device (1) according to claim 3, wherein the rotation pins (7) are positioned at a central portion of the supporting structure preferably positioned at an equidistant position between the two idle wheels.

5. The self-propelled lawn mower device (1) according to claim 3, wherein each rotation pin (7) is positioned at a lateral portion of the supporting structure, wherein the distance between the two rotation pins is greater than the distance between each rotation pin and the corresponding idle wheel.

6. The self-propelled lawn mower device (1) according to claim 2, wherein each axle (4) is hinged to the supporting structure (2) at a same rotation pin defining a single axis of rotation of the axles.

7. The self-propelled lawn mower device (1) according to claim 6, wherein the rotation pin is positioned at a central portion of the supporting structure preferably positioned at an equidistant position between the two idle wheels.

8. The self-propelled lawn mower device (1) according to any of claims 1 to 7, wherein the elastic means comprise an elastic element for each axle, positioned coaxial with the axis of rotation.

9. The self-propelled lawn mower device (1) according to any one of the preceding claims, wherein the motor-driven work apparatuses comprise at least one cutting blade configured to cut the turf during the movement of the lawn mower device.

10. The self-propelled lawn mower device (1) according to any one of the preceding claims, further comprising a switch which can be operated when both the idle wheels (3) are in the completely lowered position.

11. The self-propelled lawn mower device (1) according to claim 10, wherein the switch is connected at least to the cutting blade to stop the operation of it when the device (1) is in the raised position.

## Patentansprüche

1. Selbstfahrender Rasenmäher (1), umfassend:
eine Tragkonstruktion (2) für einen oder mehrere motorbetriebene Arbeitsgeräte,
mindestens ein Antriebsrad, das an der Tragkonstruktion (2) montiert und betriebswirksam mit den Motormitteln verbunden ist, um den motorbetriebenen Rasenmäher entlang einer Arbeitsoberfläche zu verfahren,
zwei frei laufende Räder (3), wobei ein jedes frei laufende Rad an der Tragkonstruktion (2) mittels einer Achse (4) montiert ist,
wobei eine jede Achse in struktureller Hinsicht von der anderen getrennt und an der Tragkonstruktion montiert ist, sodass sie sich unabhängig von der anderen Achse rund um eine Rotationsachse (R), die im rechten Winkel zur Achse positioniert ist, zwischen einer abgesenkten und einer angehobenen Position relativ zur Tragkonstruktion dreht,
wobei der selbstfahrende Rasenmäher elastische Mittel (6) umfasst, die ausgelegt sind, um auf jeder Achse entgegenwirkend einer Hebebewegung der jeweiligen Achse zu arbeiten, wobei die elastischen Mittel (6) ein elastisches Element (8) umfassen, das zwischen den zwei Achsen (4) in einem vorgegebenen Abstand von der jeweiligen Rotationsachse (R) eingesetzt ist,
wobei der Rasenmäher **dadurch gekennzeichnet ist, dass** die Achsen (4) jeweilige geneigte Oberflächen (9) aufweisen, die einander zugewandt positioniert sind und
einen winkeligen Sitz (10) positionieren, der gleichauf mit den beiden Achsen (4) positioniert ist, wobei das elastische Element (8) im winkeligen Sitz (10) positioniert ist.

2. Selbstfahrender Rasenmäher (1) nach Anspruch 1, wobei eine jede Achse (4) gelenkig an der Tragkonstruktion (2) an einem Endabschnitt (4a) der Achse befestigt ist.

3. Selbstfahrender Rasenmäher (1) nach Anspruch 2, wobei eine jede Achse (4) gelenkig an der Tragkonstruktion (2) an einem jeweiligen Drehzapfen (7) befestigt ist, wobei der Drehzapfen separat und in einem Abstand positioniert ist, sodass jeweilige Rotationsachsen (R) definiert werden, die parallel zueinander positioniert sind.

4. Selbstfahrender Rasenmäher (1) nach Anspruch 3, wobei die Drehzapfen (7) an einer mittigen Position der Tragkonstruktion vorzugsweise an einer gleichabständigen Position zwischen den zwei frei laufenden Rädern positioniert sind.

5. Selbstfahrender Rasenmäher (1) nach Anspruch 3, wobei ein jeder Drehzapfen (7) an einer seitlichen Position der Tragkonstruktion positioniert ist, wobei der Abstand zwischen den zwei Drehzapfen größer ist als der Abstand zwischen einem jeden Drehzapfen und dem entsprechenden frei laufenden Rad.

6. Selbstfahrender Rasenmäher (1) nach Anspruch 2, wobei eine jede Achse (4) gelenkig an der Tragkonstruktion (2) am selben Drehzapfen befestigt ist, definierend eine einzelne Rotationsachse der Achsen.

7. Selbstfahrender Rasenmäher (1) nach Anspruch 6, wobei der Drehzapfen an einer mittigen Position der Tragkonstruktion vorzugsweise an einer gleichabständigen Position zwischen den zwei frei laufenden Rädern positioniert ist.

8. Selbstfahrender Rasenmäher (1) nach einem der Ansprüche 1 bis 7, wobei die elastischen Mittel ein elastisches Element für eine jede Achse umfassen, das koaxial zur Rotationsachse positioniert ist.

9. Selbstfahrender Rasenmäher (1) nach einem der vorhergehenden Ansprüche, wobei die motorbetriebenen Arbeitsgeräte mindestens ein Schneidmesser umfassen, das ausgelegt ist, um den Rasen während des Verfahrens des Rasenmähers zu schneiden.

10. Selbstfahrender Rasenmäher (1) nach einem der vorhergehenden Ansprüche, zudem umfassend einen Schalter, der betätigt werden kann, wenn sich beide frei laufenden Räder (3) in der komplett abgesenkten Position befinden.

11. Selbstfahrender Rasenmäher (1) nach Anspruch 10, wobei der Schalter mindestens an das Schneidmesser angeschlossen ist, um dessen Betrieb zu stoppen, wenn sich der Rasenmäher (1) in der angehobenen Position befindet.

## Revendications

1. Tondeuse à gazon (1) automotrice, comprenant :
une structure de support (2) pour un ou plusieurs appareils de travail motorisés,
au moins une roue motrice montée sur la structure de support (2) et reliée de manière fonctionnelle à des moyens moteurs servant à déplacer la tondeuse à gazon motorisé le long d'une surface de travail,
deux roues folles (3), chaque roue folle étant montée sur la structure de support (2) au moyen d'un essieu (4),
dans laquelle chaque essieu est structurellement séparé de l'autre et est monté sur la structure de support de manière à tourner indépendamment de l'autre essieu autour d'un axe de rotation (R) positionné perpendiculairement à l'essieu lui-même, entre une position abaissée et une position relevée par rapport à la structure de support elle-même,
dans laquelle la tondeuse à gazon automotrice comprend des moyens élastiques (6) configurés de manière à fonctionner sur chaque essieu en opposition à un mouvement de levage de l'essieu respectif, lesdits moyens élastiques (6) comprenant un élément élastique (8) interposé entre les deux essieux (4) à une distance donnée de l'axe de rotation (R) respectif,
ladite tondeuse à gazon étant **caractérisée en ce que** les essieux (4) possèdent des surfaces inclinées (9) respectives positionnées en face l'une de l'autre définissant un siège oblique (10) positionné à cheval sur les deux essieux (4), et dans laquelle l'élément élastique (8) est positionné dans le siège oblique (10) .

2. Tondeuse à gazon (1) automotrice selon la revendication 1, dans laquelle chaque essieu (4) est monté articulé sur la structure de support (2) à une partie d'extrémité (4a) de l'essieu lui-même.

3. Tondeuse à gazon (1) automotrice selon la revendication 2, dans laquelle chaque essieu (4) est monté articulé sur la structure de support (2) en correspondance d'un pivot de rotation (7) respectif, les pivots de rotation étant séparés et positionnés à une distance telle qu'ils définissent des axes de rotation (R) respectifs positionnés parallèlement les uns par rapport aux autres.

4. Tondeuse à gazon (1) automotrice selon la revendication 3, dans laquelle les pivots de rotation (7) sont positionnés en correspondance d'une partie centrale de la structure de support, de préférence positionnés à une position équidistante entre les deux roues folles.

5. Tondeuse à gazon (1) automotrice selon la revendication 3, dans laquelle chaque pivot de rotation (7) est positionné en correspondance d'une partie latérale de la structure de support, dans laquelle la distance entre les deux pivots de rotation est supérieure à la distance entre chaque pivot de rotation et la roue libre correspondante.

6. Tondeuse à gazon (1) automotrice selon la revendication 2, dans laquelle chaque essieu (4) est monté articulé sur la structure de support (2) en correspondance d'un même pivot de rotation définissant un seul axe de rotation des essieux.

7. Tondeuse à gazon (1) automotrice selon la revendication 6, dans laquelle le pivot de rotation est positionné en correspondance d'une partie centrale de la structure de support, de préférence à une position équidistante entre les deux roues folles.

8. Tondeuse à gazon (1) automotrice selon l'une quelconque des revendications 1 à 7, dans laquelle les moyens élastiques comprennent un élément élastique pour chaque essieu, positionné de façon coaxiale à l'axe de rotation.

9. Tondeuse à gazon (1) automotrice selon l'une quelconque des revendications précédentes, dans laquelle les appareils de travail motorisés comprennent au moins une lame de coupe configurée pour couper le gazon pendant le mouvement de la tondeuse à gazon.

10. Tondeuse à gazon (1) automotrice selon l'une quelconque des revendications précédentes, comprenant de plus un interrupteur pouvant être actionné lorsque les deux roues folles (3) sont en position complètement abaissée.

11. Tondeuse à gazon (1) automotrice selon la revendication 10, dans laquelle l'interrupteur est relié au moins à la lame de coupe pour arrêter le fonctionnement de celle-ci lorsque la tondeuse à gazon (1) se trouve en position relevée.
